# EUROPÄISCHE PATENTSCHRIFT

(11) **EP 0 901 949 B1**
(45) Veröffentlichungstag und Bekanntmachung des Hinweises auf die Patenterteilung: **23.10.2002**
(21) Anmeldenummer: 98115128.5
(22) Anmeldetag: 12.08.1998
(51) Int. Cl.: B60T 8/26, B60T 8/58

(54) **Verfahren zur Abbremsung eines Fahrzeuges**
Method for braking a vehicle
Procédé de freinage d'un véhicule

(30) Priorität: 11.09.1997 DE 19739984
(43) Veröffentlichungstag der Anmeldung: 17.03.1999
(73) Patentinhaber: DaimlerChrysler AG, 70567 Stuttgart (DE)
(72) Erfinder: Fischer, Jörg, 73728 Esslingen (DE); Reiner, Michael, 70736 Fellbach (DE)

(56) Entgegenhaltungen:
- EP-A- 0 111 636
- WO-A-91/01235
- DE-A- 19 513 509
- DE-A- 19 625 341
- DE-C- 19 514 185
- US-A- 4 553 788
- US-A- 5 145 239

## Beschreibung

Die Erfindung betrifft ein Verfahren zur Abbremsung eines Fahrzeuges gemäß dem Oberbegriff des Patentanspruchs 1.

Im Stillstand und in Fahrt mit gleichmäßiger Geschwindigkeit befindet sich ein Fahrzeug im "statischen" Zustand. Ein "dynamischer" Zustand eines Fahrzeuges tritt beim Beschleunigen und beim Abbremsen des Fahrzeuges auf. Während der Dauer dieses Zustands treten infolge der dynamischen Achslastverlagerung an die Stelle der statischen Ashslastverteilung bzw. der statischen Achslasten dynamische Werte. Beim Abbremsen eines Fahrzeuges in der Vorwärtsfahrt tritt eine dynamische Achslastverlagerung von der Hinterachse zur Vorderachse auf, deren Größe u. a. von der Höhe der Fahrzeugverzögerung abhängt.

Diese Achslastverlagerung kann bei einigen Fahrzeugbauarten unter bestimmten Beladungsbedingungen bei höheren Fahrzeugverzögerungen zu einer erheblichen Verringerung der Bodenhaftung an der Hinterachse und infolge der damit verbundenen Verringerung der Seitenführungskraft zu einer erheblichen Einbuße an Richtungsstabilität des Fahrzeuges führen. Besonders auffällig sind in diesem Zusammenhang Fahrzeuge mit geringem statischen Hinterachslast-Anteil, insbesondere in Verbindung mit hoch liegendem Schwerpunkt. Beispiele für solche Fahrzeuge finden sich insbesondere unter den solo fahrenden Sattelzugmaschinen, d. h. Sattelzugmaschinen ohne Auflieger.

Der Erfindung liegt die Aufgabe zugrunde, mit einfachen Mitteln die Richtungsstabilität kritischer Fahrzeuge, insbesondere von Sattelzugmaschinen, beim Abbremsen zu verbessern.

Diese Aufgabe wird durch die in dem Patentanspruch 1 angegebene Erfindung gelöst. Vorteilhafte Ausgestaltungen und Weiterbildungen sind in den Unteransprüchen angegeben.

Bei hohen Fahrzeugverzögerungen kann die oben erwähnte dynamische Achslastverlagerung bei besonders kritischen Fahrzeugen, insbesondere bei Sattelzugmaschinen ohne Auflieger, zu einer Senkung des Hinterachslastanteils bis hin zu einem Anheben der Hinterachse und infolgedessen zu einer Verringerung der Seitenführungskraft führen. Diese unerwünschte Erscheinung unterbindet die Erfindung, indem der die Bremskraft an der Vorderachse bewirkende Bremsdruck auf einen vorbestimmten Wert begrenzt wird, wenn aufgrund geringer Fahrzeugmasse mit einem kritischen Fahrzeugverhalten zu rechnen ist.

Die Erfindung läßt sich praktisch ohne oder nur mit geringem zusätzlichen Aufwand in Verbindung mit blockiergeschützten Bremsanlagen jeder Bauart und für jede Art Druckmittel ausführen.

Die für die Erfindung erforderliche Bestimmung der Fahrzeugmasse kann grundsätzlich auf beliebige Art vorgenommen werden, beispielsweise durch Wiegen des Fahrzeuges oder mittels fahrzeugeigener Lastsensoren.

Bei Fahrzeugen, bei denen neben der blockiergeschützten Bremsanlage noch Mittel zur Bestimmung bestimmter Betriebsdaten der Antriebsanlage, aus denen die auf die Fahrbahn ausgeübte Antriebskraft ableitbar sind, z.B. das Motordrehmoment, die Motordrehzahl, die Drehzahl der von dem Motor angetriebenen Achse des Fahrzeuges, ist die Erfindung mit besonders geringem Zusatzaufwand und somit besonders vorteilhaft einsetzbar, weil dann die Fahrzeugmasse aus dem Antriebskraftbedarf der Antriebsanlage des Fahrzeuges und der hieraus resultierenden Fahrzeugbeschleunigung bei einem Anfahrvorgang ermittelt werden kann. Die Fahrzeugbeschleunigung wird hierbei aus Signalen der Blockierschutzanlage (ABS) gewonnen.

Die Erfindung wird nunmehr unter Angabe weiterer Vorteile anhand Ausführungsbeispiels unter Verwendung von Zeichnungen näher erläutert. Es zeigen
- Fig. 1: schematisch eine Bremsanlage,
- Fig. 2: eine Darstellung des erfindungsgemäßen Verfahrens als Flußdiagramm.

In der Fig. stellen durchgehende Linien Druckleitungen und strichpunktierte Linien elektrische Signal- und Steuerleitungen dar.

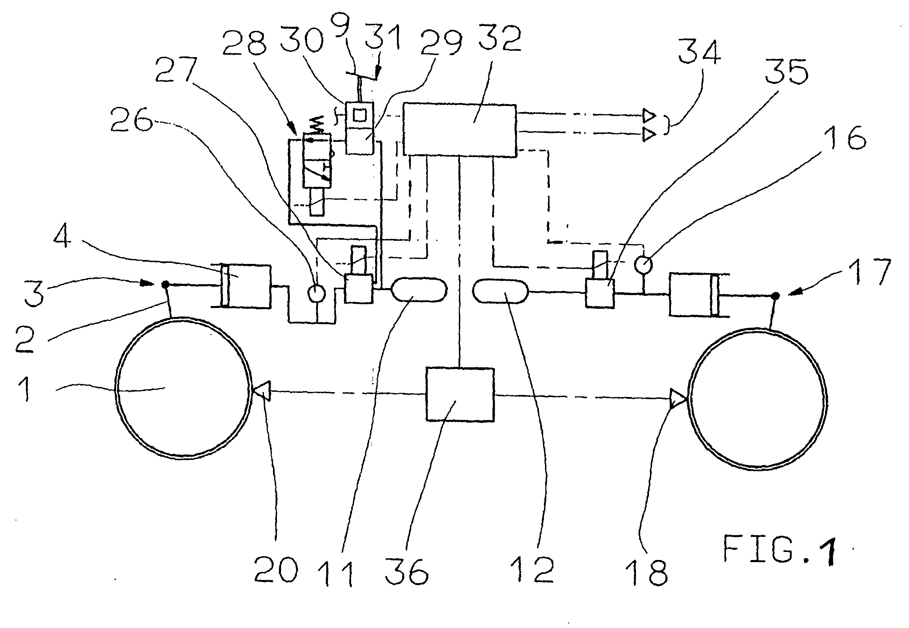

Die in der Fig. 1 dargestellte Bremsanlage mit einer Vorderachsbremse (3) und einer Hinterachsbremse (17) besteht aus einer üblicherweise als "elektrisch betätigt mit pneumatischer Redundanz" bezeichneten Basisanlage und einer Blockierschutzanlage (ABS), die, wie sich aus dem Folgenden ergibt, in dieser Bremsanlage weitgehend miteinander integriert sind.

Für eine Bremsanlage mit üblicherweise weiteren Vorderachs- und Hinterachsbremsen gelten die folgenden Ausführungen entsprechend. Die Bremsanlage ist für Druckluft als Druckmittel ausgelegt. Für andere Druckmittel, als welche insbesondere hydraulische in Betracht kommen, sind dem Fachmann geläufige Anpassungen erforderlich.

Die Basisanlage ist von einer verbreiteten Bauart und besteht aus einer Druckbeschaffungsanlage, den genannten Bremsen, Steuereinrichtungen und den zugehörigen Druckleitungen.

Der Begriff "Bremse" soll alle an der Bremskrafterzeugung beteiligten Komponenten umfassen. Dies sind die Radbremse, die mittels einer Bremstrommel und Bremsbakken bzw. mittels einer oder mehrerer Bremsscheiben und Bremsklötzen die Bremskraft erzeugt sowie die der gegenseitigen Anpressung dieser Bauteile dienende Zuspanneinrichtung, wie ein Bremszylinder, und etwaige Übertragungsglieder. An der Vorderachsbremse (3) sind, auch repräsentativ für die Hinterachsbremse (17), die Radbremse (1), die Zuspanneinrichtung (4) und das Übertragungsglied (2) angedeutet.

Von der Druckbeschaffungsanlage sind nur jeweils einer den Bremsen (3, 17) zugeordnete Druckspeicher (11 bzw. 12) dargestellt. Zu der Druckbeschaffungsanlage gehören außerdem ein oder mehrere Druckerzeuger und Druckmittelaufbereitungs- und Schutzeinrichtungen üblicher Bauarten, die nicht dargestellt sind.

Die Basisanlage weist als Steuereinrichtungen einen elektro-pneumatischen Bremswertgeber (31), eine Steuerelektronik (32), je einen elektrisch betätigten Bremsdruckmodulator (27, 35) für die Bremsen (3, 17) und ein elektrisch betätigtes 3/2-Wegeventil (28) auf. Je nach Bauart der Bremsdruckmodulatoren (27, 35) können noch ein Hinterachs-Drucksensor (16) und ein den von dem Vorderachs-Bremsdruckmodulator (27) durchgelassenen Vorderachsbremsdruck erfassender Vorderachs-Drucksensor (26) den Steuereinrichtungen zuzurechnen sein.

Der Vorderachs-Drucksensor (26) ist an geeigneter Stelle der Vorderachs-Zuspanneinrichtung (4), des Vorderachs-Bremsdruckmodulators (27) oder der dazwischen liegenden Druckleitung angeordnet und elektrisch mit Eingängen der Steuerelektronik (32) verbunden. Der Hinterachs-Drucksensor (16) ist in analoger Weise an geeigneter Stelle der Hinterachsbremse angeordnet.

Die Drucksensoren bedeuten in der Regel keinen zusätzlichen Aufwand, da solche Drucksensoren üblicherweise ohnehin in die Bremsdruckmodulatoren (27, 35) integriert sind, beispielsweise als Istwertgeber für die Bremsdruckregelung oder zur Kontrolle der Bremsdruckmodulatoren.

Die Steuergeräte (32, 36) sind der besseren Übersichtlichkeit halber getrennt dargestellt, werden in der Praxis aber regelmäßig baulich und funktionell integriert sein, so daß auch unter diesem Gesichtspunkt die Druckbegrenzungseinrichtung und damit das erfindungsgemäße Verfahren ohne oder zumindest mit sehr geringem zusätzlichen Aufwand ausführbar sind.

Der Bremswertgeber (31) weist einen elektrischen Teil (30) und einen Druckteil (29) auf. Der Ausgang des elektrischen Teils (30) ist mit dem Eingang der Steuerelektronik (32) verbunden. Andere Eingänge der Steuerelektronik (32) sind über einen als Signalleitung dargestellten Datenbus mit einer die Blockierschutzfunktion steuernden ABS-Elektronik (36) verbunden. Weitere Eingänge der Steuerelektronik (32) können mit Sensoren verbunden sein. Beispielhaft für solche sind mit dem gemeinsamen Bezugszeichen (34) zwei Sensoren dargestellt, die beispielsweise Achslastsensoren sein können. Die Steuerelektronik (32) kann über den zur ABS-Elektronik (36) führenden Datenbus zusätzlich mit weiteren, in dem Fahrzeug eingebauten Steuergeräten z.B. für den Fahrzeugmotor, das Getriebe oder einen eventuell vorhandenen Retarder verbunden sein.

Die Ausgänge der Steuerelektronik (32) sind mit den elektrischen Steuerteilen der Bremsdruckmodulatoren (27, 35) verbunden und des 3/2-Wegeventils (28) verbunden.

Die Druckeingänge der Bremsdruckmodulatoren (27, 35) sind mit dem jeweils zugeordneten Druckspeicher (11 bzw. 12) verbunden. Der Druckausgang des Hinterachs-Bremsdruckmodulators (35) ist mit der Zuspanneinrichtung der Hinterachsbremse (17) verbunden, während der Druckausgang des Vorderachs-Bremsdruckmodulators (27) mit der Zuspanneinrichtung (4) der Vorderachsbremse (3) verbunden ist.

Der Eingang des Druckteils (29) des Bremswertgebers (31) ist mit dem Vorderachs-Druckspeicher (11), sein Ausgang ist mit dem Eingang des 3/2-Wegeventil (28) verbunden. Der Ausgang des 3/2-Wegeventil (28) ist mit einem zweiten Druckeingang des Vorderachs-Bremsdruckmodulators (27) verbunden.

Die Bremsdruckmodulatoren (27, 35) dienen in dieser Bremsanlage auch als ABS-Ventile. Deshalb werden von der ABS-Elektronik (36) erzeugte ABS-Steuersignale über den Datenbus der Steuerelektronik (32) zugeführt.

Beim Einwirken des Fahrers auf ein Betätigungsorgan (9) des Bremswertgebers (31) erzeugt dessen elektrischer Teil (30) ein elektrisches Bremsbedarfsignal, während dessen Druckteil (29) aus dem Vorderachs-Druckspeicher (11) einen Druck durchläßt. Beide Ausgangsgrößen sind von der Betätigungskraft auf das Betätigungsorgan (9) und/oder von dessen Verstellweg abhängig.

Die Steuerelektronik (32) führt eine Reihe von Steuerungs- und Regelungsaufgaben in dem Fahrzeug aus. Eine dieser Aufgaben besteht darin, in Abhängigkeit von dem Verzögerungswunsch des Fahrers die Bremsen (3, 17) derart anzusteuern, daß das Fahrzeug die gewünschte Verzögerung erreicht. Hierbei führt die Steuerelektronik (32) verschiedene sich gegenseitig beeinflussende und einander überlagerte Verfahren durch, wie z. B. Minimierung des Bremsbelagverschleißes, eine Abstimmung der Bremskräfte zwischen Zugfahrzeug und Anhängefahrzeug und eine Bremsdruckbegrenzung an der Vorderachse im Falle einer relativ geringen Fahrzeugmasse.

Bei Empfang des Bremsbedarfsignals berechnet die Steuerelektronik (32) nach einprogrammierten Algorithmen aus dem Bremsbedarfsignal und gegebenenfalls den Signalen der Sensoren (34) den Bedarf an Vorderachsbremsdruck und Hinterachsbremsdruck und gibt entsprechende Bremsdruck-Steuersignale an die Bremsdruckmodulatoren (27, 35) ab. Diese lassen bei Empfang dieser Signale den jeweils berechneten Bremsdruck aus dem jeweils zugeordneten Druckspeicher (11 bzw. 12) zu der jeweiligen Bremse (3 bzw. 17) durch, wobei im Falle des Vorderachs-Bremsdruckmodulators (27) noch der an dem zweiten Druckeingang vorliegende, von dem 3/2-Wegeventil (28) durchgelassene Druck derart berücksichtigt wird, daß der jeweils höhere Druck zu der Bremse (3) durchgelassen wird.

Sind die elektrischen Komponenten der Steuereinrichtungen im Normalbetrieb in Ordnung, gibt die Steuerelektronik (32) gleichzeitig mit der Berechnung des Bedarfs an Bremsdrücken oder mit der Ausgabe der Bremsdruck-Steuersignale an die Bremsdruckmodulatoren (27, 35) ein Sperrsignal an das 3/2-Wegeventil (28) ab. Dieses sperrt daraufhin die Verbindung zwischen dem Druckteil (29) des Bremswertgebers (31) und dem Vorderachs-Bremsdruckmodulator (27) und verbindet dessen zugeordneten Eingang mit der Atmosphäre, so daß der Vorderachs-Bremsdruckmodulator (27) in diesem Normalbetrieb nur den von dem Steuergerät (32) berechneten Vorderachsbremsdruck zu der Zuspanneinrichtung (4) der Vorderachsbremse (3) durchläßt. Es ist auch bekannt, das 3/2-Wegeventil (28) von dem von dem Vorderachs-Bremsdruckmodulator (27) durchgelassenen Vorderachsbremsdruck in seine Sperrstellung steuern zu lassen.

Im Falle von Störungen der elektrischen Komponenten der Steuereinrichtungen gibt die Steuerelektronik (32) kein Sperrsignal an das 3/2-Wegeventil (28) ab, woraufhin dieses die Verbindung zwischen dem Druckteil (29) des Bremswertgebers (31) und dem Vorderachs-Bremsdruckmodulator (27) offenhält, so daß in dem nunmehr stattfindenden Notbetrieb die Vorderachsbremse (3) rein druckbetätigt ist. In dieser Betriebsart ist die sog. pneumatische Redundanz wirksam.

Solche Bremsanlagen sind bekannt, z. B. aus der US-A-5145239 (die auf die DE-A-3916642 zurückgeht).

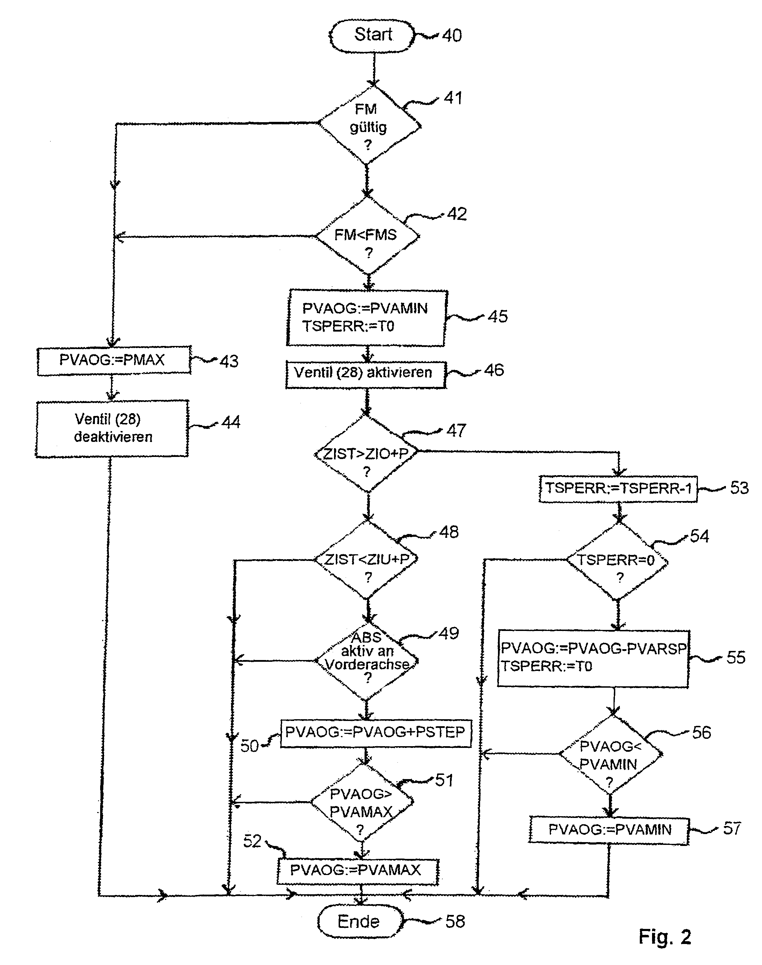

Eines der zuvor bezüglich des Steuergerätes (32) genannten Verfahren, nämlich die erfindungsgemäße Begrenzung des Bremsdruckes an der Vorderachse des Fahrzeuges, ist in der Fig. 2 als Flußdiagramm näher dargestellt. Das Verfahren gemäß Fig. 2 beginnt mit dem Block (40).

In einem darauf folgenden Verzweigungsblock (41) wird als notwendiges Kriterium für die erfindungsgemäße Bremsdruckbegrenzung das Vorliegen eines gültigen Wertes für die Fahrzeugmasse (FM) überprüft. Die Fahrzeugmasse kann aus Lastsensorsignalen gewonnen werden, wird aber vorzugsweise gemäß dem aus der DE 195 13 509 A1 beschriebenen Verfahren aus physikalischen Größen, die bei einem durch die Kraft des Antriebsmotors erzeugten Beschleunigungsvorgang des Fahrzeuges ermittelt werden, bestimmt. Als physikalische Größen werden hierbei insbesondere das Motordrehmoment, die Motordrehzahl, die Drehzahl der von dem Motor angetriebenen Achse des Fahrzeuges, aus denen die Antriebskraft berechnet wird, und die aus der Antriebskraft des Motors resultierende, von eventuell vorhandenen Hangabtriebskräften bereinigte Fahrzeugbeschleunigung berücksichtigt. Als Berechnungsgrundlage wird das Grundgesetz der Mechanik nach Newton (Kraft = Masse x Beschleunigung) angewendet.

Da somit für eine Berechnung der Fahrzeugmasse (FM) wenigstens ein Beschleunigungsvorgang des Fahrzeuges stattgefunden haben muß, liegt unmittelbar nach Inbetriebnahme des Fahrzeuges in dem Steuergerät (32) noch kein gültiger Wert für die Fahrzeugmasse (FM) vor.

In diesem Fall endet das Verfahren nach Deaktivierung der erfindungsgemäßen Begrenzungsmaßnahmen in den Zuweisungsblöcken (43, 44) in dem Block (58). Insbesondere nach Zurücksetzen des zur Bremsdruckbegrenzung an der Vorderachse dienenden Druckgrenzwertes (PVAOG) auf den maximal in der Bremsanlage auftretenden Bremsdruckwert (PMAX) in dem Zuweisungsblock (43) und durch Deaktivierung des zur Redundanzbegrenzung dienenden Ventils (28) in dem Zuweisungsblock (44).

Im Falle des Vorliegens eines gültigen Wertes für die Fahrzeugmasse (FM) wird in dem Verzweigungsblock (42) geprüft, ob die Fahrzeugmasse (FM) einen vorbestimmten Fahrzeugmassengrenzwert (FMS) unterschreitet. Der Fahrzeugmassengrenzwert (FMS) wird hierbei derart festgelegt, daß ein geeigneter Wert zwischen der Fahrzeugmasse für einen Fahrzeugzug und der Fahrzeugmasse für eine ohne Auflieger betriebene Sattelzugmaschine bestimmt wird. Es kann beispielsweise der Mittelwert dieser beiden Fahrzeugmassenwerte benutzt werden. Der vordefinierte Fahrzeugmassengrenzwert (FMS) kann vorzugsweise in einem frei programmierbaren, nichtflüchtigen Speicher in dem Steuergerät (32) gespeichert werden.

Falls in dem Verzweigungsblock (42) festgestellt wird, daß die Fahrzeugmasse (FM) den Fahrzeugmassengrenzwert (FMS) überschreitet, dann wird ebenso wie bei Nichtvorliegen eines gültigen Wertes für die Fahrzeugmasse (FM) zu den Zuweisungsblöcken (43, 44) verzweigt, mittels derer in zuvor beschriebener Weise die Bremsdruckbegrenzung deaktiviert wird. Sodann endet das Verfahren in dem Block (58).

Falls jedoch in dem Verzweigungsblock (42) festgestellt wird, daß die Fahrzeugmasse (FM) den Fahrzeugmassengrenzwert (FMS) unterschreitet, was zum Beispiel auf eine ohne Auflieger betriebene Sattelzugmaschine hindeutet, dann wird in dem Zuweisungsblock (45) der für eine Bremskraftbegrenzung verantwortliche Druckgrenzwert (PVAOG) auf einen vordefinierten Minimalwert (PVAMIN), z. B. 4 bar, gesetzt. Zusätzlich wird ein Zeitzähler (TSPERR) auf einen Anfangswert (T0) gesetzt. In dem darauffolgenden Zuweisungsblock (46) wird die Redundanzbegrenzung aktiviert, indem das Steuergerät (32) ein entsprechendes Schaltsignal an das Ventil (28) abgibt.

Mit den bisher beschriebenen Verfahrensschritten wird zunächst einmal sichergestellt, daß ein stabilitätskritische Eigenschaften aufweisendes Fahrzeug für den Fahrer beherrschbar bleibt. Hierbei wurde in dem Zuweisungsblock (45) der Bremsdruck auf einen vorgegebenen, relativ geringen Wert, der in erster Linie unter Sicherheitsaspekten festgelegt wird, begrenzt. Diese bisher beschriebenen Verfahrensschritte setzen im wesentlichen eine Sensierung der Raddrehzahlen sowie die Kenntnis bestimmter Betriebsdaten der Antriebsanlage voraus. Sie können deshalb auch in Bremsanlagen ohne elektropneumatische Druckregelkreise zum Einsatz kommen. Es ist jedoch möglich, daß dieser Wert unter bestimmten Umständen, z. B. bei unzureichend gewarteten Bremsen oder einer Fahrbahnneigung, größer gewählt werden könnte, ohne daß ein kritischer Fahrzustand auftritt. Aus diesem Grund wird in den im folgenden beschriebenen Verfahrensschritten eine adaptive Anpassung des Druckgrenzwertes (PVAOG) an die jeweils vorliegenden äußeren Bedingungen durchgeführt. Voraussetzung für dieses weitergehende Verfahren ist ein elektropneumatischer Druckregelkreis, mit welchem der Bremsdruck der Vorderachse stufenlos verändert werden kann. Figur 1 zeigt beispielhaft eine solche Anlage.

Es wird zunächst in dem Verzweigungsblock (47) überprüft, ob der Istwert der Fahrzeugverzögerung (ZIST), der aufgrund der aus den Signalen der Sensoren (20, 18) ermittelten Raddrehgeschwindigkeiten durch zeitliche Differentiation bestimmt wird, einen oberen Grenzwert überschreitet. Der obere Grenzwert setzt sich aus einem vordefinierten fahrzeugspezifischen oberen Ist-Verzögerungsgrenzwert (ZIO) und einem die Fahrbahnneigung repräsentierenden Anteil (P) zusammen. Der obere Ist-Verzögerungsgrenzwert (ZIO) ist invariabel und in dem Steuergerät (32) gespeichert.

Der die Fahrbahnneigung repräsentierende Anteil (P) wird in dem Steuergerät (32) durch Verwendung der dem Steuergerät (32) über den Datenbus zugeführten physikalischen Größen gemäß dem in der DE 195 13 509 A1 beschriebenen Verfahren während der Fahrt des Fahrzeuges ermittelt. Unmittelbar nach Fahrtantritt, d. h. wenn noch kein gültiger Wert für den Anteil (P) bestimmt werden konnte, ist dieser Anteil daher zunächst auf den Wert 0 gesetzt. Im Verlauf der Fahrt kann der Anteil (P) positive Werte bei ansteigender Fahrbahn (Berganfahrt) und negative Werte bei abfallender Fahrbahn (Bergabfahrt) annehmen.

Wenn der Istwert der Fahrzeugverzögerung (ZIST) den oberen Grenzwert (ZIO + P) überschreitet, dann wird zu einem Verfahrenszweig verzweigt, in dem aus Gründen der Fahrsicherheit eine Verringerung des Druckgrenzwertes (PVAOG) erforderlich ist. Diese Verringerung erfolgt nicht in relativ kleinen, schnell aufeinanderfolgenden Druckschritten, sondern wird in gewissen, durch die Zeitkonstante (T0) festgelegten Zeitabschnitten in verhältnismäßig großen Schritten, die vorzugsweise 1 bar betragen, durchgeführt. Die Steuerung der zeitlichen Abfolge dieser Schritte wird mittels des Zuweisungsblocks (53), in dem der Zeitzähler (TSPERR) regelmäßig verringert wird, und des Verzweigungsblocks (54), in dem das Ende eines Zeitabschnittes (TSPERR = 0) abgefragt wird, gesteuert. Bei Beendigung eines derartigen Zeitabschnittes wird in dem Zuweisungsblock (55) der Druckgrenzwert (PVAOG) um einen Schritt (PVARSP) verringert. Außerdem wird der Zeitzähler (TSPERR) wieder auf den Anfangswert (T0) gesetzt.

Mittels des Verzweigungsblocks (56) wird sodann überprüft, ob durch die zuvor beschriebene Verringerung des Druckgrenzwertes (PVAOG) ein für eine Abbremsung des Fahrzeuges und die Erfüllung gesetzlicher Vorschriften mindestens notwendiger Bremsdruckwert (PVAMIN) unterschritten wird. Im Falle einer Unterschreitung dieses Mindestwertes (PVAMIN) wird in einem Zuweisungsblock (57) der Druckgrenzwert (PVAOG) auf den Mindestwert (PVAMIN) gesetzt.

Wenn allerdings in dem Verzweigungsblock (47) festgestellt wurde, daß der Istwert der Fahrzeugverzögerung (ZIST) den oberen Grenzwert nicht überschreitet, dann wird in einem darauffolgenden Verzweigungsblock (48) in analoger Weise überprüft, ob der Istwert der Fahrzeugverzögerung (ZIST) einen unteren Grenzwert unterschreitet. Dieser untere Grenzwert wird in analoger Weise wie der obere Grenzwert aus einem fahrzeugspezifischen unteren Ist-Verzögerungsgrenzwert (ZIU), der ebenfalls in dem Steuergerät (32) gespeichert ist, und dem zuvor schon beschriebenen, die Fahrbahnneigung repräsentierenden Anteil (P) bestimmt. Falls dieser untere Grenzwert (ZIU + P) nicht unterschritten wird, dann steht nunmehr fest, daß der Istwert der Fahrzeugverzögerung (ZIST) in dem erwünschten Bereich, der durch die in den Verzweigungsblöcken (47, 48) abgefragten Grenzwerte (ZIO + P bzw. ZIU + P) festgelegt wird, befindet. In diesem Fall besteht kein Bedarf, den derzeit eingestellten Druckgrenzwert (PVAOG) zu verändern, so daß direkt zu dem Block (58) verzweigt wird, mit dem das Verfahren endet.

Falls jedoch in dem Verzweigungsblock (48) festgestellt wird, daß der Istwert der Fahrzeugverzögerung (ZIST) den unteren Grenzwert (ZIU + P) unterschreitet, dann könnte eine Erhöhung der Bremskraft bzw. eine Erhöhung des Druckgrenzwertes (PVAOG) zur Erzielung eines kurzen Bremsweges notwendig sein. Allerdings ist eine derartige Erhöhung der Bremskraft in dem Falle, daß bereits eine Blockierschutzregelung (ABS) an der hier betrachteten Vorderachse des Fahrzeuges durchgeführt wird, nicht ratsam, da eine Blockierschutzregelung bereits auf eine maximale Ausnutzung des zur Verfügung stehenden Reibwertes zwischen Fahrzeugrädern und Fahrbahn hindeutet. Daher wird im Falle einer aktiven Blockierschutzregelung (ABS) ebenfalls das Verfahren mit dem Block (58) ohne eine Erhöhung des Druckgrenzwertes (PVAOG) beendet.

Wenn jedoch die zuvor erwähnte Blockierschutzregelung nicht durchgeführt wird, wird in dem Zuweisungsblock (50) der Druckgrenzwert (PVAOG) um einen relativ kleinen Druckschritt (PSTEP) erhöht. Diese Erhöhung wird im Falle der Erfüllung der erforderlichen Bedingungen der Verzweigungsblöcke (41, 42, 47, 48, 49) im Gegensatz zu der Verringerung des Druckgrenzwertes in relativ kurzen Zeitabständen und mit den bereits erwähnten kleinen Druckschritten (PSTEP) durchgeführt, so daß sich in der Praxis ein rampenartiger Bremsdruckverlauf ergibt.

Die Erhöhung des Druckgrenzwertes (PVAOG) wird mittels des Verzweigungsblocks (51) und des Zuweisungsblocks (52) auf einen oberen zulässigen Bremsdruckgrenzwert (PVAMAX) begrenzt. Ein geeigneter Wert für den oberen Bremsdruckgrenzwert (PVAMAX) ist 6,5 bar.

Daraufhin endet das Verfahren in dem Block (58).

## Patentansprüche

1. Verfahren zur Abbremsung eines Fahrzeuges mit wenigstens einer Vorderachse und wenigstens einer Hinterachse, die jeweils mit wenigstens einer durch Druck betätigten Bremse (3, 17) bestückt sind, **dadurch gekennzeichnet, daß** im Falle einer einen vorbestimmten Grenzwert (FMS) unterschreitenden Fahrzeugmasse (FM) der der Vorderachsbremse (3) zuführbare Druck auf einen vorbestimmbaren Druckgrenzwert (PVAOG) begrenzt wird.

2. Verfahren nach Anspruch 1, wobei in dem Fahrzeug wenigstens Mittel zur Bestimmung der von einer Antriebsanlage des Fahrzeuges auf die Fahrbahn ausgeübten Antriebskraft und der Fahrzeugbeschleunigung vorgesehen sind, **dadurch gekennzeichnet, daß** die Fahrzeugmasse (FM) aus dem bei wenigstens einem der Abbremsung vorausgegangenen Anfahrvorgang aufgetretenen Antriebskraftbedarf der Antriebsanlage des Fahrzeuges und der Fahrzeugbeschleunigung ermittelt wird.

3. Verfahren nach einem der vorhergehenden Ansprüche, **dadurch gekennzeichnet, daß** der Druckgrenzwert (PVAOG) zur Angleichung des erzielbaren Istwertes der Fahrzeugverzögerung (ZIST) an einen vorgegebenen Sollwertbereich (ZIO + P, ZIU + P) veränderbar ist.

## Claims

1. A process for braking a vehicle with at least one front axle and at least one rear axle, each of which is equipped with at least one pressure-actuated brake (3, 17),
**characterised in that**
in the event of a vehicle mass (FM) which falls below a predetermined limit value (FMS), the pressure which can be fed to the front axle brake (3) is limited to a predeterminable pressure limit value (PVAOG).

2. A process in accordance with claim 1, the vehicle containing at least means for determining the tractive force exerted by a drive unit on the road surface and the vehicle acceleration,
**characterised in that**
the vehicle mass (FM) is determined from the drive force requirement of the drive unit occurring in at least one starting process preceding braking and the vehicle acceleration.

3. A process in accordance with one of the preceding claims,
**characterised in that**
the pressure limit value (PVAOG) for matching the achievable actual value for vehicle deceleration (ZIST) to a predetermined set-point range (ZIO + P, ZIU + P) can be changed.

## Revendications

1. Procédé de freinage d'un véhicule comportant au moins un essieu avant et au moins un essieu arrière qui sont chacun équipés d'au moins un frein (3, 17) manoeuvré par une pression, **caractérisé par le fait que**, dans le cas d'une masse du véhicule (FM) descendant en dessous d'une valeur limite prédéterminée (FMS), la pression qui peut être amenée au frein sur l'essieu avant (3) est limitée à une valeur limite prédéterminable de la pression (PVAOG).

2. Procédé selon la revendication 1, dans lequel sont prévus dans le véhicule au moins des moyens pour déterminer la force d'entraînement exercée sur la chaussée par une installation d'entraînement du véhicule ainsi que l'accélération du véhicule, **caractérisé par le fait que** la masse du véhicule (FM) est déterminée à partir du besoin en force d'entraînement, apparu dans le cas d'au moins un processus de démarrage antérieur au freinage, de l'installation d'entraînements du véhicule, ainsi qu'à partir de l'accélération du véhicule.

3. Procédé selon l'une des revendications précédentes, **caractérisé par le fait que** la valeur limite de la pression (PVAOG) peut être modifiée pour placer la valeur réelle, à obtenir, de la décélération du véhicule (ZIST) sur une plage de valeur prescrite (ZIO + P, ZIU + P).
